# EUROPEAN PATENT SPECIFICATION

(11) **EP 3 983 736 B1**
(45) Date of publication and mention of the grant of the patent: **17.04.2024**
(21) Application number: 20740233.0
(22) Date of filing: 10.06.2020
(51) Int. Cl.: F25D 13/06, F25D 25/04, B65G 47/66

(54) **FREEZING FACILITY**
GEFRIEREINRICHTUNG
INSTALLATION DE CONGÉLATION

(30) Priority: 11.06.2019 DK PA201970364
(43) Date of publication of application: 20.04.2022
(73) Proprietor: Carsoe Seefood ApS, 9220 Aalborg Øst (DK)
(72) Inventor: TRUDSLEV, Carsten, 9000 Aalborg (DK)
(74) Representative: Patrade A/S
(86) International application number: PCT/DK2020/000175
(87) International publication number: WO 2020/249172

(56) References cited:
- EP-A1- 1 043 555
- US-A- 3 831 293
- US-A- 4 699 559

## Description

The present invention relates to a freezing facility of the kind of the preamble of claim 1, with a first vertical plate freezer and a second vertical plate freezer, which second vertical plate freezer is placed after the first plate freezer in a longitudinal direction, forming a gap, wherein each vertical plate freezer has an upper frame portion with a number of open freezing chambers arranged downwards for freezing of contents, such as fish, as well as a lower frame portion arranged below the upper frame portion with i) an endless conveyor with an upper conveyor surface moveable in the longitudinal direction, and ii) a moveable freezer bottom, which is adapted to be able to close off all freezing chambers downwards in a first position of the freezer bottom, and which is adapted to be moved opposite the longitudinal direction towards a second position below the conveyor for allowing successive emptying downwards underway of said contents onto the upper conveyor surface for conveyance of the contents in the longitudinal direction, wherein for each vertical plate freezer the mutual positioning in vertical direction of the upper frame portion and the lower frame portion can be varied between a freezing position, wherein the freezer bottom in its first position closes off the freezing chambers downwards, and an emptying position, wherein the freezer bottom in its first position is situated at a vertical distance below the freezing chambers.

Such freezing facility is described in the European patent EP 1043555. A similar facility, wherein the second vertical plate freezer's freezer bottom in its first position furthermore is situated at a distance above the upper conveyor surface of the endless conveyor of the second vertical plate freezer, for conveyance on this upper conveyor surface of discharged contents from the first vertical plate freezer, is known from CN101329133.

In connection with such prior art freezing facilities, there is a need to be able to bring the frozen material to for instance a packaging station with few conveyors. Fig. 5 in the European patent mentioned above shows a freezing facility with two successively placed vertical plate freezers. However, the prior art technique does not specify how the frozen material can be conveyed from the vertical plate freezer first placed in the conveying direction, while freezing of the contents in the subsequent vertical plate freezer is in progress, and it is thus an object of the invention to provide an improved freezing facility of the kind mentioned above, whereby frozen contents can be transferred, in a reliable manner, from the first placed vertical plate freezer regardless of whether freezing takes place in the subsequent one.

According to the invention, this task is solved by the freezing facility comprising an additional conveyor adapted to be capable of being moved between a) an active position, wherein it bridges said gap in order to continuously transfer said discharged contents away from the conveyor of the first vertical plate freezer to the conveyor of the second vertical plate freezer, and b) an inactive position, wherein the additional conveyor allows for movement of the freezer bottom of the second vertical plate freezer from its first position to its second position.

Advantageous embodiments of the invention will appear from the dependent patent claims.

### Brief explanation of the drawing

Figs 1a and 1b show an embodiment of a freezing facility according to the invention, viewed from the side and from above, respectively, and during emptying of a vertical plate freezer shown to the right,
Figs 2a and 2b show a partial section in larger scale of the area at the transition between the two vertical plate freezers shown in Figs 1a and 1b, viewed from the side and in perspective, respectively, with an additional conveyor between the two vertical plate freezers in its inactive position,
Figs 3a and 3b show the freezing facility in Figs 1a and 1b, viewed from the side and from above, respectively, and during emptying of the vertical plate freezer shown to the left, and
Figs 4a and 4b show a partial section in larger scale of the area at the transition between the two vertical plate freezers shown in Figs 3a and 3b, viewed from the side and in perspective, respectively, with the additional conveyor in its active position.

### Detailed description of an embodiment

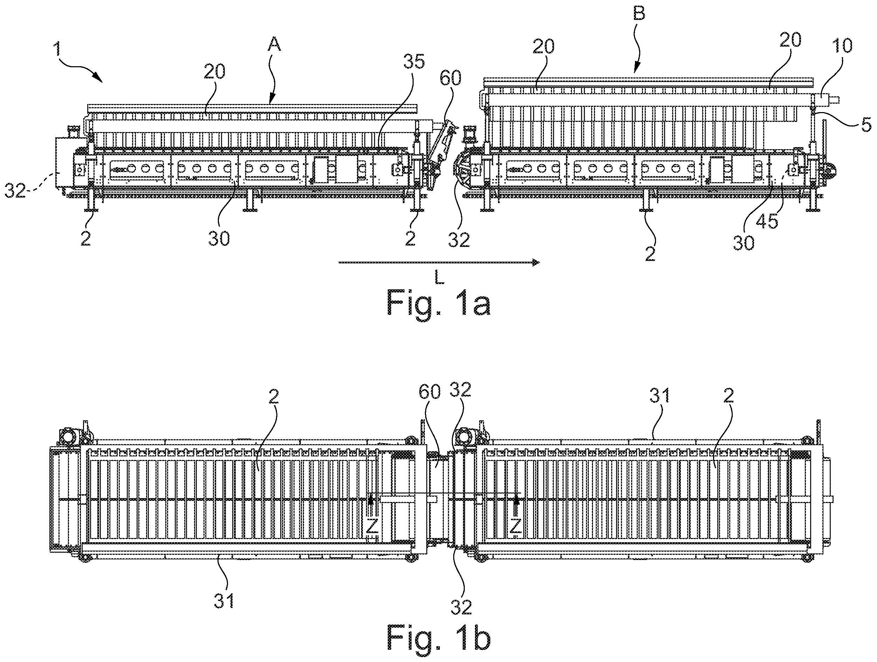

Figs 1a and 1b show, from a side and from above, respectively, a freezing facility 1 comprising a first elongated vertical plate freezer A and a second elongated vertical plate freezer B, wherein the second vertical plate freezer B is placed in immediate extension of the first vertical plate freezer A, viewed in the marked longitudinal direction L. To the right of the second vertical plate freezer B, a conveyor (not shown) can be arranged with a conveying direction in the plane of the drawing or out of the plane of the drawing. The freezing facility 1 can for instance be placed on board a ship, such as a fishing vessel.

The vertical plate freezers A, B can be of the type described in EP 1043555, and reference is thus made to this patent document for further explanation of the procedure that can be followed by freezing of contents, such as fish F, having been filled down into a row of in the longitudinal direction L successive upwards and downwards open freezing chambers 20, constituting a part of each vertical plate freezer A, B. As the two vertical plate freezers A, B will typically be identical, the explanation below applies to both vertical plate freezers A, B. With the freezing facility, blocks of the frozen contents, which can subsequently be packaged, are provided.

The vertical plate freezers A, B each comprises an elongated upper frame portion 10 with the freezing chambers 20, as well as, arranged below this upper portion 10, an elongated lower frame portion 30 with legs 2 for placing the vertical plate freezers A, B on a floor (not shown). As regards each vertical plate freezer A, B, the mutual positioning in vertical direction of the upper frame portion 10 and the lower frame portion 30 can be varied between a freezing position, shown for the vertical plate freezer A to the left in Fig. 1a, and an emptying position, shown for the vertical plate freezer B to the right in Fig. 1a, wherein the two frame portions 10, 30 are separated from each other by a distance D1. The movement in the vertical direction can for instance be provided by means of a piston arranged in a pressure cylinder 5.

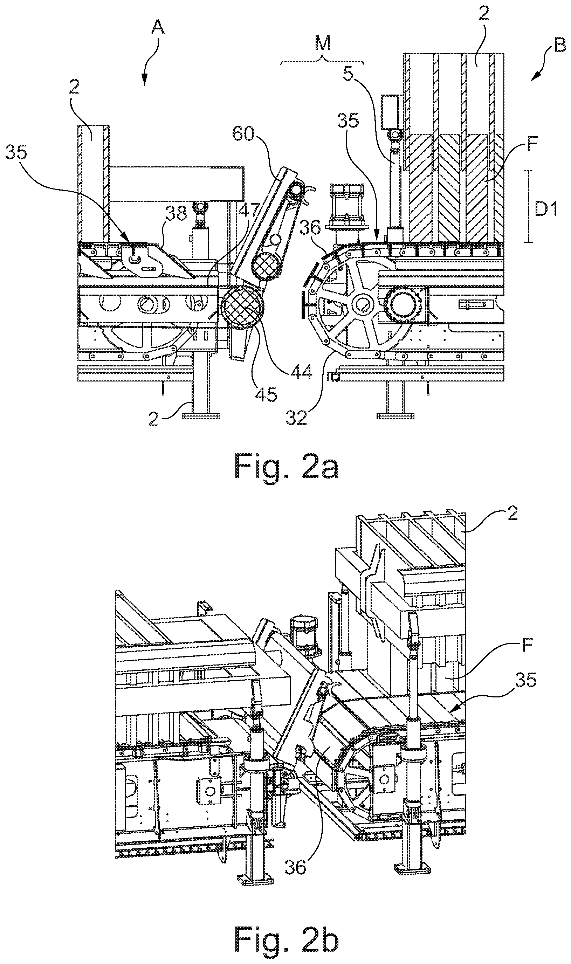

The lower frame portion 30 comprises, between its ends and as most clearly shown in Fig. 2a, an endless belt conveyor 45, which is driven by a driving roller 44 placed at one end of the lower frame portion 30, and which has an upper conveyor surface 47, which at suitable activation of the belt conveyor 45 moves in the longitudinal direction L.

The lower frame portion 30 also comprises a moveable, elongated freezer bottom 35 with a relatively smooth surface, which, in a first position, is adapted to generally extend in a horizontal plane above the upper conveyor surface 47. In this first position, the freezer bottom 35 closes off all freezing chambers 20 downwards.

The freezer bottom 35 is situated in this first position while freezing of the contents F takes place in the freezing chambers 20 with the frame portions 10, 30 in the freezing position, until the frozen contents F can be discharged, when the frame portions 10, 30 are taken to the emptying position. For the first vertical plate freezer A, said first position of the moveable freezer bottom 35 is shown to the left in Fig. 1a, wherein the frame portions 10, 30 are in the freezing position.

The freezer bottom 35 consists of a number of lamellas 36 hinged together and is adapted to, by activation of a driving wheel 32, be moved in the direction opposite the longitudinal direction L in the horizontal plane mentioned above, towards a second position, wherein the freezer bottom 35 is situated upside down below the endless conveyor 45. The freezer bottom 35 can thus along its opposing longitudinal side edges be connected to a chain or the like, which travels around the driving wheel 32, as well as a corresponding wheel arranged at the other end of the vertical plate freezer B.

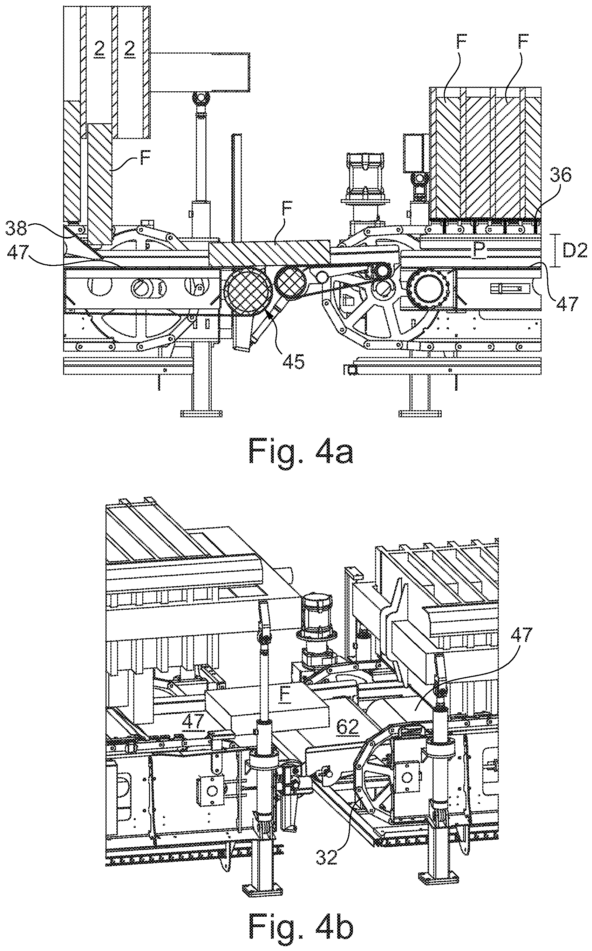

Along each of the sides of the lower frame portion 30, guides 31 are arranged that control the freezer bottom 35 during this movement. Figs 2a and 2b show how the driving wheel 32 successively grabs the lamellas 36, when the driving wheel 32 is turned in the direction shown by the arrow to bring the freezer bottom 35 towards its second position below the conveyor 45 of the vertical plate freezer. Fig. 1a shows the freezer bottom 35 for the vertical plate freezer B to the right on its way towards its second position. When the freezer bottom 35 finally is in its second position, there will from the left to the right, as clearly appears from Fig. 4, be free access to the upper conveyor surface 47, with the object described below.

When the freezer bottom 35 is situated in its first position, and the frame portions 10, 30 are in the emptying position, the freezer bottom 35 is in the vertical distance D1 mentioned above below the downwardly open freezing chambers 20, with the blocks of the frozen contents F having partially fallen out of the freezing chambers 20 for abutment against the underlying freezer bottom 35, for instance as a consequence of the procedure described in EP 1043555. When the freezer bottom 35 at this stage is moved towards its second position opposite the longitudinal direction L, i.e. to the left on the drawing, a successive downward emptying of said contents F takes place onto the upper conveyor surface 47 for conveyance thereby of the contents F in the longitudinal direction L, i.e. to the right in the drawing, in principle in the same manner as described in EP 1043555. Thus, the freezer bottom 35 preferably has at its end a ramp 38, which can be turned downwards towards the conveyor surface 47, so that the frozen blocks of the contents F can successively glide downwards the last bit out of a respective freezing chamber 20 and can get to lie horizontally on the portion of the conveyor surface 47 that is exposed by the movement of the freezer bottom 35 towards its second position.

Since there must be room for the movement path of the second vertical plate freezer's B freezer bottom 35 between the two vertical plate freezers A, B according to the invention, it is not possible to place the two vertical plate freezers A, B, so that their respective conveyor surfaces 47 are situated completely close to each other. This problem is typically non-existent at the second vertical plate freezer's B opposite end, wherein the blocks F are brought further from the freezing facility 1, because the freezer bottom 35 does not move down along this end.

In order now in the longitudinal direction L to be able to transfer the lying blocks of the frozen contents F from the first vertical plate freezer A as freezing of the contents F takes place in the second vertical plate freezer B, the freezing facility 1 according to the invention comprises an additional conveyor 60 adapted to, in an active position shown in Figs 4a and 4b, bridge the gap M between the two vertical plate freezers A, B. In this active position, the additional conveyor can move the blocks F to the conveyor surface 47 of the second vertical plate freezer B after the freezer bottom 35 of the second vertical plate freezer B has been brought to its second position, or alternatively when the freezer bottom 35 of the second vertical plate freezer B is situated completely in its first position, whereby, as mentioned, there is access from the left to the conveyor surface 47 of the second vertical plate freezer B.

Figs 2a and 2b show the additional conveyor 60 in its inactive position, wherein it allows movement of the second vertical plate freezer's B freezer bottom 35 from its first position towards its second position via the gap M, during emptying of the second vertical plate freezer B in the manner described above, where the freezer bottom 35 is moved from its first position. When the emptying of the vertical plate freezers A, B is completed, the respective freezer bottoms 35 are guided back to their first position.

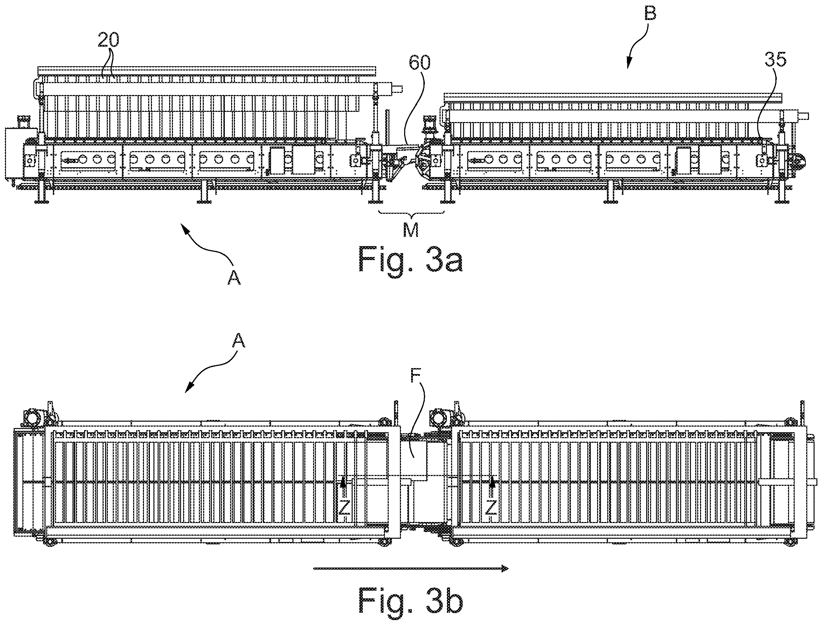

It will be understood that for allowing conveyance on the underlying conveyor surface 47 of the second vertical plate freezer B of the discharged contents F from the first vertical plate freezer A, while the second vertical plate freezer's B frame portions 10, 30 are situated in the freezing position, see Fig. 3a, the freezer bottom 35 of the second vertical plate freezer B is arranged, so that in its first position it generally extends in said horizontal plane at a distance D2 above the underlying conveyor's 45 upper conveyor surface 47, corresponding to at least the thickness of the blocks, as shown in Fig. 4a, i.e. during formation of the passage indicated by P in the drawing.

Furthermore, it will be understood that the freezing facility can comprise a control system, adapted to automatically control the movement of the additional conveyor 60 in accordance with the operations that are performed with the two vertical plate freezers A, B, so that it is ensured that the additional conveyor 60 does not collide with the moveable freezer bottom 35 of the freezer B, when the freezer bottom 35 is moved to a position completely or partially below the conveyor 45.

## Claims

1. A freezing facility (1), comprising a first vertical plate freezer (A) and a second vertical plate freezer (B), which second vertical plate freezer (B) is placed after the first plate freezer (A) in a longitudinal direction (L), forming a gap (M), wherein each vertical plate freezer (A, B) has:
- an upper frame portion (10) with a number of, in the longitudinal direction (L), successively arranged downwardly open freezing chambers (20), delimited by vertical plates, for freezing of contents (F), such as fish, as well as
- a lower frame portion (30) arranged below the upper frame portion (10) with
i) an endless conveyor (45) with an upper conveyor surface (47) moveable in the longitudinal direction (L) and
ii) a moveable freezer bottom (35), which is adapted to be able to close off all freezing chambers (20) downwards in a first position of the freezer bottom (35), and which is adapted to be movable opposite the longitudinal direction (L) towards a second position below the conveyor (45) for allowing successive emptying downwards underway of said contents (F) onto the upper conveyor surface (47) for conveyance of the contents (F) in the longitudinal direction (L),
- wherein for each vertical plate freezer (A, B), the mutual positioning in the vertical direction of the upper frame portion (10) and the lower frame portion (30) can be varied between a freezing position, wherein the freezer bottom (35) in its first position closes off the freezing chambers (20) downwards, and an emptying position, wherein the freezer bottom (35) in its first position is situated at a vertical distance (D1) below the freezing chambers (20),
**characterized in that**
- the second vertical plate freezer's (B) freezer bottom (35) in its first position is situated at a distance (D2) above the upper conveyor surface (47) of the endless conveyor (45) of the second vertical plate freezer (B), for conveyance on this upper conveyor surface (47) of discharged contents (F) from the first vertical plate freezer (A), and **in that**
- the freezing facility comprises an additional conveyor (60) adapted to be moved between
a) an active position, wherein it bridges the gap (M) to continuously transfer said discharged contents (F) away from the conveyor (45) of the first vertical plate freezer (A) to the conveyor (45) of the second vertical plate freezer (B), and
b) an inactive position, wherein the additional conveyor (60) allows forsaid movement opposite the longitudinal direction (L) of the freezer bottom (35) of the second vertical plate freezer (B) from its first position towards its second position below the endless conveyor (45) of the second vertical plate freezer (B).

2. A freezing facility (1) according to claim 1, wherein the additional conveyor (60) is tiltably mounted on the first vertical plate freezer (A).

3. A freezing facility (1) according to the preceding claim, wherein the additional conveyor (60) is tiltably mounted on the lower frame portion (30) of the first vertical plate freezer (A).

4. A freezing facility (1) according to any one of the preceding claims, wherein the additional conveyor (60) is an endless conveyor with an upper conveyor surface (62) for the discharged contents (F) moveable in the longitudinal direction (L).

5. A freezing facility (1) according to any one of the preceding claims, wherein the upper frame portion (10) is adapted to be displaced upwards and downwards relative to the lower frame portion (30).

6. A freezing facility (1) according to any one of the preceding claims, wherein at least the freezer bottom (35) of the second vertical plate freezer (B) consists of lamellas (36) hinged together.

7. A freezing facility (1) according to any one of the preceding claims, wherein at least the second vertical plate freezer (B) at its end closest to the first vertical plate freezer (A) has a pair of driving wheels (32), each engaged with a side of the freezer bottom (35) of the second vertical plate freezer (B) that extends in the longitudinal direction (L), and a portion of the additional conveyor (60) in its active position extends between the driving wheels (32).

## Patentansprüche

1. Gefriereinrichtung (1), umfassend einen ersten Gefrierapparat mit Vertikalplatten (A) und einen zweiten Gefrierapparat mit Vertikalplatten (B), wobei der zweite Gefrierapparat mit Vertikalplatten (B) in einer Längsrichtung (L) unter Bildung eines Spalts (M) hinter dem ersten Gefrierapparat mit Platten (A) angeordnet ist, wobei jeder Gefrierapparat mit Platten (A, B) Folgendes aufweist:
- einen oberen Rahmenabschnitt (10) mit einer Anzahl in Längsrichtung (L) hintereinander angeordneter, nach unten offener, durch vertikale Platten begrenzter Gefrierkammern (20) zum Gefrieren von Füllgütern (F), wie etwa Fisch, sowie
- einen unterhalb des oberen Rahmenabschnitts (10) angeordneten unteren Rahmenabschnitt (30) mit
i) einem Endlosförderer (45) mit einer in Längsrichtung (L) beweglichen oberen Förderfläche (47) und
ii) einem beweglichen Gefrierapparatboden (35), der dazu ausgestaltet ist, in der Lage zu sein, in einer ersten Position des Gefrierapparatbodens (35) alle Gefrierkammern (20) nach unten hin abzuschließen, und der dazu ausgestaltet ist, entgegen der Längsrichtung (L) zu einer zweiten Position unterhalb des Förderers (45) hin beweglich zu sein, um ein aufeinanderfolgendes Entleeren der Füllgüter (F) nach unten hin auf die obere Förderfläche (47) zu ermöglichen, um den Inhalt (F) in der Längsrichtung (L) zu befördern,
- wobei für jeden Gefrierapparat mit Vertikalplatten (A, B) die gegenseitige Positionierung in der vertikalen Richtung des oberen Rahmenabschnitts (10) und des unteren Rahmenabschnitts (30) zwischen einer Gefrierposition, in welcher der Gefrierapparatboden (35) in seiner ersten Position die Gefrierkammern (20) nach unten abschließt, und einer Entleerposition, in welcher der Gefrierapparatboden (35) in seiner ersten Position in einem vertikalen Abstand (D1) unterhalb der Gefrierkammern (20) angeordnet ist, variiert werden kann,
**dadurch gekennzeichnet, dass**
- der Gefrierapparatboden (35) des zweiten Gefrierapparats mit Vertikalplatten (B) in seiner ersten Position in einem Abstand (D2) über der oberen Förderfläche (47) des Endlosförderers (45) des zweiten Gefrierapparats mit Vertikalplatten (B) zur Beförderung der aus dem ersten Gefrierapparat mit Vertikalplatten (A) entladenen Füllgüter (F) auf die obere Förderfläche (47) angeordnet ist, und
**dadurch, dass**
- die Gefriereinrichtung einen zusätzlichen Förderer (60) umfasst, der dazu ausgestaltet ist, zwischen Folgendem bewegt zu werden:
a) einer aktiven Position, in der er den Spalt (M) überbrückt, um die entladenen Füllgüter (F) kontinuierlich von dem Förderer (45) des ersten Gefrierapparats mit Vertikalplatten (A) zu dem Förderer (45) des zweiten Gefrierapparats mit Vertikalplatten (B) zu transportieren, und
b) einer inaktiven Position, in welcher der zusätzliche Förderer (60) die Bewegung entgegen der Längsrichtung (L) des Gefrierapparatbodens (35) des zweiten Gefrierapparats mit Vertikalplatten (B) von seiner ersten Position zu seiner zweiten Position hin unterhalb des Endlosförderers (45) des zweiten Gefrierapparats mit Vertikalplatten (B) ermöglicht.

2. Gefriereinrichtung (1) nach Anspruch 1, wobei der zusätzliche Förderer (60) an dem ersten Gefrierapparat mit Vertikalplatten (A) kippbar montiert ist.

3. Gefriereinrichtung (1) nach dem vorhergehenden Anspruch, wobei der zusätzliche Förderer (60) kippbar an dem unteren Rahmenabschnitt (30) des ersten Gefrierapparats mit Vertikalplatten (A) montiert ist.

4. Gefriereinrichtung (1) nach einem der vorhergehenden Ansprüche, wobei der zusätzliche Förderer (60) ein Endlosförderer mit einer oberen Förderfläche (62) für die in Längsrichtung (L) bewegbaren entladenen Füllgüter (F) ist.

5. Gefriereinrichtung (1) nach einem der vorhergehenden Ansprüche, wobei der obere Rahmenabschnitt (10) dazu ausgestaltet ist, relativ zu dem unteren Rahmenabschnitt (30) nach oben und unten verschoben zu werden.

6. Gefriereinrichtung (1) nach einem der vorhergehenden Ansprüche, wobei zumindest der Gefrierapparatboden (35) des zweiten Gefrierapparats mit Vertikalplatten (B) aus Lamellen (36) besteht, die gelenkig miteinander verbunden sind.

7. Gefriereinrichtung (1) nach einem der vorhergehenden Ansprüche, wobei zumindest der zweite Gefrierapparat mit Vertikalplatten (B) an seinem dem ersten Gefrierapparat mit Vertikalplatten (A) nächstliegenden Ende ein Paar von Antriebsrädern (32) aufweist, das jeweils mit einer Seite des Gefrierapparatbodens (35) des zweiten Gefrierapparats mit Vertikalplatten (B) in Eingriff steht, die sich in der Längsrichtung (L) erstreckt, und sich ein Abschnitt des zusätzlichen Förderers (60) in seiner aktiven Position zwischen den Antriebsrädern (32) erstreckt.

## Revendications

1. Installation de congélation (1), comprenant un premier congélateur à plaques verticales (A) et un second congélateur à plaques verticales (B), lequel second congélateur à plaques verticales (B) est placé après le premier congélateur à plaques (A) dans une direction longitudinale (L), formant un espace (M), dans lequel chaque congélateur à plaques verticales (A, B) a :
- une partie de cadre supérieure (10) avec, dans la direction longitudinale (L), un certain nombre de chambres de congélation (20) ouvertes successivement disposées vers le bas, délimitées par des plaques verticales, pour congeler un contenu (F), tel que du poisson, ainsi
- qu'une partie de cadre inférieure (30) disposée sous la partie de cadre supérieure (10) avec
i) un convoyeur sans fin (45) avec une surface de convoyeur supérieure (47) mobile dans la direction longitudinale (L) et
ii) un fond de congélateur mobile (35), qui est adapté pour pouvoir fermer toutes les chambres de congélation (20) vers le bas dans une première position du fond de congélateur (35), et qui est adapté pour être mobile à l'opposé de la direction longitudinale (L) vers une seconde position en dessous du convoyeur (45) pour permettre une vidange successive vers le bas dudit contenu (F) en route sur la surface de convoyeur supérieure (47) pour le transport du contenu (F) dans la direction longitudinale (L),
- dans laquelle pour chaque congélateur à plaques verticales (A, B), le positionnement mutuel dans la direction verticale de la partie de cadre supérieure (10) et de la partie de cadre inférieure (30) peut être modifié entre une position de congélation, dans laquelle le fond de congélateur (35) dans sa première position ferme les chambres de congélation (20) vers le bas, et une position de vidange, dans laquelle le fond de congélateur (35) dans sa première position est situé à une distance verticale (D1) en dessous des chambres de congélation (20),
**caractérisée en ce que**
- le fond de congélateur (35) du second congélateur à plaques verticales (B) dans sa première position est situé à une distance (D2) au-dessus de la surface de convoyeur supérieure (47) du convoyeur sans fin (45) du second congélateur à plaques verticales (B), pour le transport sur cette surface de convoyeur supérieure (47) de contenu déchargé (F) du premier congélateur à plaques verticales (A), et
**en ce que**
- l'installation de congélation comprend un convoyeur supplémentaire (60) adapté pour être déplacé entre
a) une position active, dans laquelle il relie l'espace (M) pour transférer en continu ledit contenu déchargé (F) du convoyeur (45) du premier congélateur à plaques verticales (A) vers le convoyeur (45) du second congélateur à plaques verticales (B), et
b) une position inactive, dans laquelle le convoyeur supplémentaire (60) permet ledit déplacement à l'opposé de la direction longitudinale (L) du fond de congélateur (35) du second congélateur à plaques verticales (B) de sa première position vers sa seconde position en dessous du convoyeur sans fin (45) du second congélateur à plaques verticales (B).

2. Installation de congélation (1) selon la revendication 1, dans laquelle le convoyeur supplémentaire (60) est monté de manière inclinable sur le premier congélateur à plaques verticales (A).

3. Installation de congélation (1) selon la revendication précédente, dans laquelle le convoyeur supplémentaire (60) est monté de manière inclinable sur la partie de cadre inférieure (30) du premier congélateur à plaques verticales (A).

4. Installation de congélation (1) selon l'une quelconque des revendications précédentes, dans laquelle le convoyeur supplémentaire (60) est un convoyeur sans fin avec une surface de convoyeur supérieure (62) pour le contenu déchargé (F) mobile dans la direction longitudinale (L).

5. Installation de congélation (1) selon l'une quelconque des revendications précédentes, dans laquelle la partie de cadre supérieure (10) est adaptée pour être déplacée vers le haut et vers le bas par rapport à la partie de cadre inférieure (30).

6. Installation de congélation (1) selon l'une quelconque des revendications précédentes, dans laquelle au moins le fond de congélateur (35) du second congélateur à plaques verticales (B) est constitué de lamelles (36) articulées entre elles.

7. Installation de congélation (1) selon l'une quelconque des revendications précédentes, dans laquelle au moins le second congélateur à plaques verticales (B) à son extrémité la plus proche du premier congélateur à plaques verticales (A) comporte une paire de roues motrices (32), chacune étant en prise avec un côté du fond de congélateur (35) du second congélateur à plaques verticales (B) qui s'étend dans la direction longitudinale (L), et une partie du convoyeur supplémentaire (60) dans sa position active s'étend entre les roues motrices (32).
